Europäisches Patentamt

European Patent Office

Office européen des brevets

(11) Veröffentlichungsnummer: **0 484 706 A2**

# EUROPÄISCHE PATENTANMELDUNG

(21) Anmeldenummer: **91117618.8**

(22) Anmeldetag: **16.10.91**

(51) Int. Cl.5: **G01N 31/22, A62B 9/00**

(30) Priorität: **08.11.90 DE 4035493**

(43) Veröffentlichungstag der Anmeldung:
**13.05.92 Patentblatt 92/20**

(84) Benannte Vertragsstaaten:
**DE FR GB IT**

(71) Anmelder: **Drägerwerk Aktiengesellschaft**
**Moislinger Allee 53-55**
**W-2400 Lübeck 1(DE)**

(72) Erfinder: **Plötz, Klaus-Bernd, Dr.**
**Carl-Diem-Strasse 58**
**W-2406 Stockelsdorf(DE)**
Erfinder: **Wezurek, Horst, Dr.**
**Mecklenburger Strasse 42**
**W-2418 Ratzeburg(DE)**
Erfinder: **Kolbe, Günther**
**Hansestrasse 112**
**W-2410 Mölln(DE)**

(54) **Feuchtigkeitsindikator für Atemschutzgerät.**

(57) Ein Feuchtigkeitsindikator zur Anzeige des Beladungszustandes einer Sauerstoff abgebenden Chemikalie mit Feuchtigkeit in einem Atemschutzgerät, welcher als Substanz das Peroxid eines Alkalimetalls enthält, soll derart verbessert werden, daß er einen irreversiblen und deutlich erkennbaren Farbumschlag zeigt und auch auf kleine Feuchtigkeitseinbrüche anspricht. Zur Lösung der Aufgabe ist vorgesehen, daß die Substanz als Reaktionssubstanz einen Zusatz eines Alkalimetall-Ozonids enthält, welcher mit der Luftfeuchtigkeit eine Farbreaktion eingeht.

Die Erfindung betrifft einen Feuchtigkeitsindikator zur Anzeige des Beladungszustands einer Sauerstoff abgebenden Chemikalie mit Feuchtigkeit in einem Atemschutzgerät, welcher als Substanz das Peroxid eines Alkalimetalls enthält.

Feuchtigkeitsindikatoren für Sauerstoff abgebende Chemikalpatronen werden vorzugsweise in Atemschutzgeräten verwendet, die als Kurzzeit Flucht- oder Hilfsgeräte den Geräteträger in nicht atembaren Atmosphären schützen. Derartige Geräte sind zusammen mit der Chemikalpatrone luftdicht in einem Tragebehälter verpackt, der erst kurz vor dem Geräteeinsatz geöffnet wird. Da die Chemikalpatrone mit Feuchtigkeit reagiert und bei dieser Reaktion Sauerstoff freisetzt, muß vor dem Geräteeinsatz eine Beladung der Chemikalpatrone mit Feuchtigkeit vermieden werden. Hierzu ist an dem Tragebehälter ein Feuchtigkeitsindikator angebracht, der die die Chemikalpatrone umgebende Atmosphäre im Innern des Gerätes überwacht und einen Feuchtigkeitseinbruch durch Farbumschlag anzeigt. Eine durch Feuchtigkeit vorgeschädigte Chemikalpatrone kann so rechtzeitig erkannt und vor dem Geräteeinsatz ausgetauscht werden.

Ein Atemschutzgerät mit einem Feuchtigkeitsindikator ist aus der DE-PS 33 15 070 bekanntgeworden. Das Atemschutzgerät besteht aus einem Tragebehälter mit einer Chemikalpatrone auf der Basis von Kaliumperoxid, durch die der Geräteträger in Pendelatmung atmet. Hierbei wird durch die Chemikalpatrone das ausgeatmete Kohlendioxid und die Atemluftfeuchtigkeit gebunden und bei dieser Reaktion Sauerstoff freigesetzt. Aufgrund der begrenzten Menge Sauerstoff, die aus der mitgeführten Kaliumperoxid-Patrone erzeugt werden kann, ist es wichtig, das Innere des Tragebehälters vor dem Geräteeinsatz hermetisch gegen das Eindringen von Feuchtigkeit abzuschließen, was mit einer an der Nahtstelle des Tragebehälters umlaufenden Dichtung erreicht wird. Weiter ist ein Feuchtigkeitsindikator vorgesehen, der eingedrungene Feuchtigkeit nachweist. Als Feuchtigkeitsindikator wird Kaliumperoxid verwendet, das irreversibel bei Feuchtigkeitseinbruch seine Farbe von gelb nach farblos ändert. Geschädigte Chemikalpatronen können so rechtzeitig erkannt und ausgewechselt werden, so daß der Geräteträger immer ein Atemschutzgerät mit voller Schutzleistung bei sich trägt.

Bei dem bekannten Feuchtigkeitsindikator ist es von Nachteil, daß der Farbumschlag im rauhen Geräteeinsatz, z. B. Untertage im Bergbau, nur schwer zu erkennen ist. Außerdem ist der Feuchtigkeitsindikator unempfindlich gegenüber kleinen Feuchtigkeitseinbrüchen, die insbesondere bei längerer Lagerung die Chemikalpatrone unbrauchbar machen können. In diesem Fall ist die Chemikalpatrone bereits vorgeschädigt, die Farbe des Feuchtigkeitsindikators jedoch noch nicht umgeschlagen.

Der Erfindung liegt daher die Aufgabe zugrunde, einen irreversiblen Feuchtigkeitsindikator auf der Basis eines Alkalimetall-Peroxids zu schaffen, der einen deutlich erkennbaren Farbumschlag anzeigt und auch auf kleine Feuchtigkeitseinbrüche anspricht.

Die Lösung der Aufgabe erfolgt dadurch, daß die Substanz als Reaktionssubstanz einen Zusatz eines Alkalimetall-Ozonids enthält, welcher mit der Luftfeuchtigkeit eine Farbreaktion eingeht.

Der Vorteil der Erfindung liegt im wesentlichen darin, daß durch den Zusatz eines Alkalimetall-Ozonids zum Alkalimetall-Peroxid ein Feuchtigkeitsindikator entsteht, der eine bessere Erkennbarkeit des Farbumschlags ermöglicht, nämlich von braun nach gelb, und auch bei schlechten Lichtverhältnissen noch gut erkennbar ist. Außerdem besitzt dieser Feuchtigkeitsindikator eine höhere Empfindlichkeit als ein reiner Alkalimetall-Peroxid Feuchtigkeitsindikator. Die Herstellung des erfindungsgemäßen Feuchtigkeitsindikators erfolgt in der weise, daß die für den Feuchtigkeitsindikator notwendige Menge Alkalimetall-Pulver - ca. 2 g - mit einem Sauerstoff/Ozon-Gemisch unter Feuchtigkeitsabschluß begast wird, bis ein homogener Farbumschlag an der Oberfläche der Pulverkörner von gelb nach braun eingetreten ist. Die hierbei eingetretene Reaktion läßt sich z. B. für Kalium durch die Gleichung $KO_2 + O_3 \longrightarrow KO_3 + O_2$ angeben.

Aus dem so begasten Alkalimetall-Pulver wird ein Tabletten-Preßling hergestellt, der dann der Feuchtigkeitsindikator ist. Bei der anschließenden Reaktion des Feuchtigkeitsindikators mit Wasser entsteht in einer ersten Zwischenstufe aus dem Kaliumozonid

$$KO_3 + H_2O \longrightarrow KO_2 + H_2O_2,$$

wobei $H_2O_2$ in einer zweiten Zwischenstufe in $H_2O_2 \longrightarrow H_2O + 1/2\ O_2$ übergeht. Die gelbe Farbe des Peroxids wird sichtbar.

Die Reaktion des Peroxids mit Wasser führt zu

$$2\ KO_2 + H_2O \longrightarrow 2\ KOH + 1.5\ O_2,$$

dem farblosen Kaliumhydroxid, unter Abspaltung von Sauerstoff. Die höhere Emfindlichkeit des erfindungsgemäßen Feuchtigkeitsindikators ist darauf zurückzuführen, daß ein Teil des in der zweiten Zwischenstufe entstehenden Wassers unmittelbar wieder mit dem Alkalimetall-Ozonid reagiert.

Versuche mit dem Feuchtigkeitsindikator nach der Erfindung haben gezeigt, daß bei Lagerung des Tabletten-Preßlings in einem Indikatorgehäuse bei Raumtemperatur und gleichzeitiger definierter Diffusion von Umgebungsfeuchte in das Gehäuseinnere, sich nach etwa 19 Stunden die Hälfte der Gesamtfläche des Feuchtigkeitsindikators von braun nach gelb verfärbt hat, während am Diffusionseintritt nur in einem Bereich von 10 % der Gesamtfläche der Farbumschlag von gelb nach farblos eingetreten ist. Bei einem bekannten Feuchtigkeitsindikator auf reiner Alkalimetall-Basis wären demnach nur 10 % der Gesamtfläche verfärbt, während der erfindungsgemäße Feuchtigkeitsindikator bereits eine Verfärbung von der Hälfte der Gesamtfläche aufweist. Im vorliegenden Fall erfolgte die Diffusion der Umgebungsluft in den Feuchteindikator über eine Querschnittsfläche von 7 Bohrungen mit einem Bohrungsdurchmesser von 0,6 mm. Die Temperaturstabilität des Feuchtigkeitsindikators ist für die Anwendung in Atemschutzgeräten ausreichend.

In den Unteransprüchen sind vorteilhafte Ausgestaltungen der Erfindung angegeben. Als Substanzen für den Feuchtigkeitsindikator können die Alkalimetalle Kalium, Rubidium und Cäsium verwendet werden. Bei Begasung mit dem Sauerstoff-Ozon-Gemisch tritt in allen Fällen ein Farbumschlag von gelb nach braun auf. Der Farbumschlag unter Einwirkung von Wasser ist für die genannten Alkalimetalle von braun über gelb nach farblos.

Es ist Zweckmäßig, den Feuchtigkeitsindikator in Form eines Tabletten Preßlings in ein Indikatorgehäuse einzusetzen, welches mit einem Sichtfenster und Diffusionsöffnungen versehen ist, durch welche die die Chemikalpatrone umgebende Atmosphäre in das Gehäuseinnere eindringen kann. Der Farbumschlag von braun über gelb nach farblos beginnt an den Diffusionsöffnungen und wandert von hier aus über die gesamte Indikatorfläche.

Die Erfindung sei an zwei Beispielen erläutert.

1. Kaliumperoxid- oder Cäsiumperoxid-Pulver wird in einem Wirbelschichtreaktor unter Feuchtigkeitsausschluß bei einer Temperatur zwischen 0 °C und 15 °C mit einem Gemisch aus Sauerstoff und Ozon mit einem Ozonanteil von 4 % begast. Innerhalb von etwa 3 Minuten Begasungszeit tritt ein Farbumschlag des Pulvers von gelb nach braun ein. Die Begasung wird beendet, wenn eine gleichmäßige braune Verfärbung eingetreten ist. Anschließend wird das Pulver in trockener Atmosphäre zu Tabletten verpreßt. Die Tabletten haben einen Durchmesser von 19 mm und eine Dicke von 4,5 mm. Alternativ zu Peroxid-Pulver können auch Granulat oder Tabletten begast werden. Die Tabletten werden als Feuchtigkeitsindikator in das Indikatorgehäuse eingesetzt.

2. Ein Tabletten-Preßling aus Rubidiumperoxid mit einem Durchmesser von 19 mm und einer Dicke von 4,5 mm wird in einem Reaktionsgefäß unter Feuchtigkeitsausschluß bei einer Temperatur zwischen 0 °C und 20 °C mit einem Gemisch aus Sauerstoff und Ozon mit einem Ozonanteil von 4 % begast. Innerhalb von etwa 3 Minuten Begasungszeit tritt ein Farbumschlag des Preßlings von gelb nach braun ein. Unter der Einwirkung von Wasser erfolgt eine Rückverfärbung von braun über gelb nach farblos. Alternativ zu Rubidiumperoxid-Tabletten können auch Rubidiumperoxid-Pulver oder Granulat begast und anschließend zu Tabletten verpresst werden.

## Patentansprüche

1. Feuchtigkeitsindikator zur Anzeige des Beladungszustands einer Sauerstoff abgebenden Chemikalie mit Feuchtigkeit in einem Atemschutzgerät, welcher als Substanz das Peroxid eines Alkalimetalls enthält, dadurch gekennzeichnet, daß die Substanz als Reaktionssubstanz einen Zusatz eines Alkalimetall-Ozonids enthält, welcher mit der Luftfeuchtigkeit eine Farbreaktion eingeht.

2. Feuchtigkeitsindikator nach Anspruch 1, dadurch gekennzeichnet, daß die Substanz Kaliumperoxid und der Zusatz Kaliumozonid ist.

3. Feuchtigkeitsindikator nach Anspruch 1, dadurch gekennzeichnet, daß die Substanz Rubidiumperoxid und der Zusatz Rubidiumozonid ist.

4. Feuchtigkeitsindikator nach Anspruch 1, dadurch gekennzeichnet, daß die Substanz Cäsiumperoxid und der Zusatz Cäsiumozonid ist.

5. Feuchtigkeitsindikator nach einem der Ansprüche 1 bis 4, dadurch gekennzeichnet, daß die Substanz mit der Reaktionssubstanz als scheibenförmiger Preßling ausgeführt und in einem Indikatorgehäuse mit Sichtfenster und Diffusionsöffnungen für die die Chemikalie umgebende Atmosphäre aufgenommen ist.